(19) Europäisches Patentamt
European Patent Office
Office européen des brevets

(11) EP 2 226 762 A1

(12) **EUROPEAN PATENT APPLICATION**

(43) Date of publication:
**08.09.2010 Bulletin 2010/36**

(51) Int Cl.:
***G06T 5/40*** *(2006.01)*

(21) Application number: **10155258.6**

(22) Date of filing: **02.03.2010**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA ME RS** | (72) Inventors:<br>• **Morelli, Gilberto**<br>  **00046 Grottaferrata (IT)**<br>• **Tellini, Paolo**<br>  **00042 Anzio (IT)**<br>• **Tripodi, Fabio**<br>  **00040 Pomezia (IT)** |
| (30) Priority: **03.03.2009 IT TO20090161** | (74) Representative: **Jorio, Paolo et al**<br>**STUDIO TORTA S.r.l.**<br>**Via Viotti, 9**<br>**10121 Torino (IT)** |
| (71) Applicant: **SELEX Galileo S.p.A.**<br>**Campi Bisenzio (IT)** | |

(54) **Equalization and processing of IR images**

(57)    The present invention relates to an equalization method for equalizing an image made up of pixels in which each pixel has a respective intensity level. The equalization method comprises: dividing the image into first regions; grouping in such a way as to form groups of first regions, each group of first regions comprising a respective plurality of adjacent first regions; computing for each group of first regions a corresponding histogram of the levels of intensity of the pixels in said first regions comprised in said group; computing for each group of first regions a corresponding cumulative function of the corresponding histogram; associating to each first region the cumulative function(s) computed for the group(s) comprising said first region; computing for each first region a corresponding first equalization function on the basis of the cumulative function(s) associated to said first region; dividing said image into second regions in such a way that each second region comprises corresponding areas of different corresponding adjacent first regions; and equalizing in each second region the intensity level of the corresponding pixels on the basis of the first equalization functions computed for the corresponding first regions.

Fig. 15

**Description**

The present invention relates to equalization and processing of images.

In particular, the present invention finds advantageous, though non-exclusive, application in the processing of images sensed in the infrared (IR) range of the electromagnetic spectrum, said images being referred to in a known way as IR images.

In addition, it is particularly advantageous to apply the present invention in the processing of IR images sensed by thermocameras in conditions of marked dynamicity, such as, for example, in the case of avionic navigation where the thermocameras are mounted on observation towers moved in azimuth and elevation and supply video flows of IR images, to which the ensuing treatment will make explicit reference, without this, however, implying any loss of generality.

As is known, a thermocamera is an instrument that senses radiation emitted in the infrared (IR) range of the electromagnetic spectrum by bodies as a function of their temperature, and produces images of said radiation.

Modern thermocameras have the capacity of distinguishing variations of approximately *0.01° K* in a range of *50° K,* which approximately corresponds to a dynamics of *5000* intensity levels (*12 - 13 bits*). Traditional screens, instead, operate using *256* levels of grey (*8 bits*), of which barely half are effectively perceptible by the human eye.

There hence becomes necessary, prior to display, a processing step that compresses and transforms the image with high dynamics acquired from a thermocamera for adapting it to the dynamics of screens with 256 levels, hence limiting considerably the information content thereof, but rendering it, at the same time, intelligible.

In fact, if on the one hand for the display it is required to reduce the number of intensity levels of the IR image acquired from a thermocamera, on the other hand it is necessary to render the IR image attractive, realistic, and enriched with all those details useful for applications based upon IR images.

If added to this is the fact that in the case of thermocameras used during avionic navigation the images are sensed in a fully dynamic context, where the scenario within the observation widow varies suddenly, presenting a high variability in the number of intensity levels to be compressed and in the details to be enhanced, it may be understood how processing of the IR images proves to be a very complex and demanding operation.

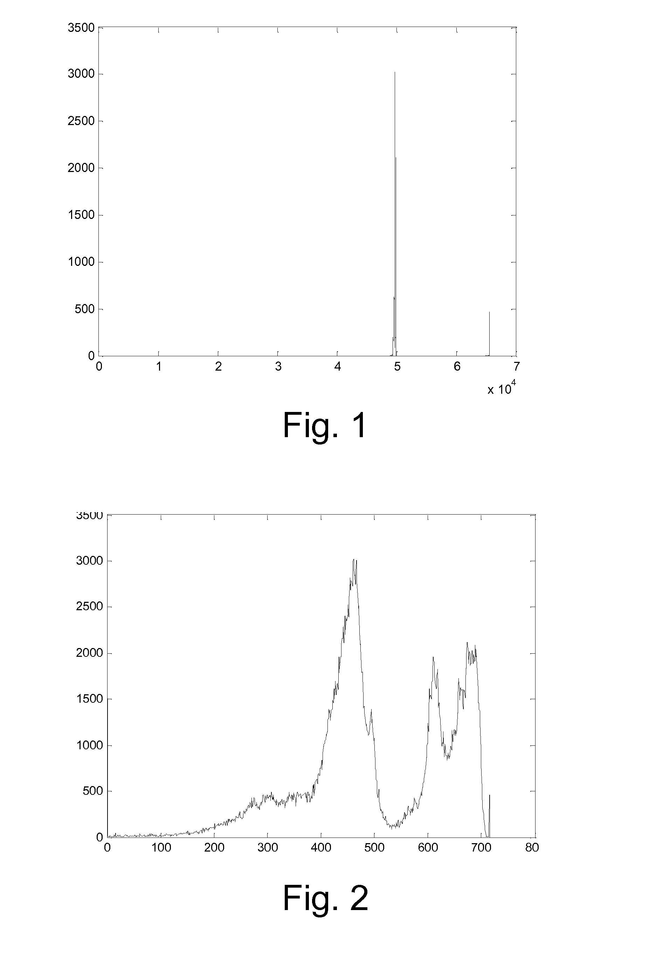

Illustrated in Figure 1 is a histogram of intensities of pixels in an example of IR image acquired from a thermocamera.

In particular, the histogram of Figure 1 has on the axis of the abscissae the entire dynamics of the intensity levels that can be sensed by the thermocamera by which the IR image has been acquired, and on the axis of the ordinates the numbers of pixels, and hence shows for each intensity level the number of the pixels that in the IR image of the example assume said intensity level.

In detail, as illustrated in Figure 1, the entire dynamics of the intensity levels that can be sensed by the thermocamera by which the IR image of the example has been acquired, is of the order of $10^4$.

In addition, Figure 1 also shows how the intensities of the pixels are concentrated in a given range of the intensity levels and how many intensity levels are not assumed by any pixel, a characteristic that is typical of any IR image acquired from a thermocamera.

In this regard, some techniques for processing IR images compact the dynamics of the intensity levels and, subsequently, execute a linear compression of the compacted intensity levels.

An example of said techniques is disclosed in the patent application No. US 5,249,241.

In particular, the patent application No. US 5,249,241 teaches:

- computing a histogram of the intensities of the pixels in an IR image acquired from a thermocamera, referred to hereinafter as "original histogram";
- computing a compact number of levels $N_c$ that is equal to the number of the intensity levels that in the IR image are assumed by at least one pixel;
- eliminating from the axis of the abscissae of the original histogram the intensity levels that are not assumed by any pixel;
- assigning to each intensity level not eliminated from the axis of the abscissae of the original histogram a new value comprised between *0* and $N_c$-*1* and corresponding to the position occupied by the intensity level on the axis of the abscissae with respect to all the other intensity levels not eliminated, thus creating a compact histogram;
- associating to each pixel a first intensity value $n_1$ comprised between *0* and $N_c$-*1* and equal to the new value assigned in the compact histogram to the corresponding intensity level that the pixel assumed originally;
- compressing linearly the first values of intensity $n_1$ of the pixels associating to each pixel a second intensity value $n_2$ comprised between *0* and *1* and equal to a ratio between the corresponding first intensity value $n_1$ associated thereto and $N_c$-*1,* i.e., $n_2 = n_1/(N_c$-*1);* and
- assigning to each pixel a final intensity value *I* comprised between *0* and *255,* which can hence be displayed on a screen, by simply multiplying the corresponding second value $n_2$ associated thereto by a factor of *255* and then rounding off to the closest integer.

In order to be able to understand better the technique for processing IR images disclosed in the patent application No. US 5,249,241 and just described the reader is referred to Figures 2, 3 and 4.

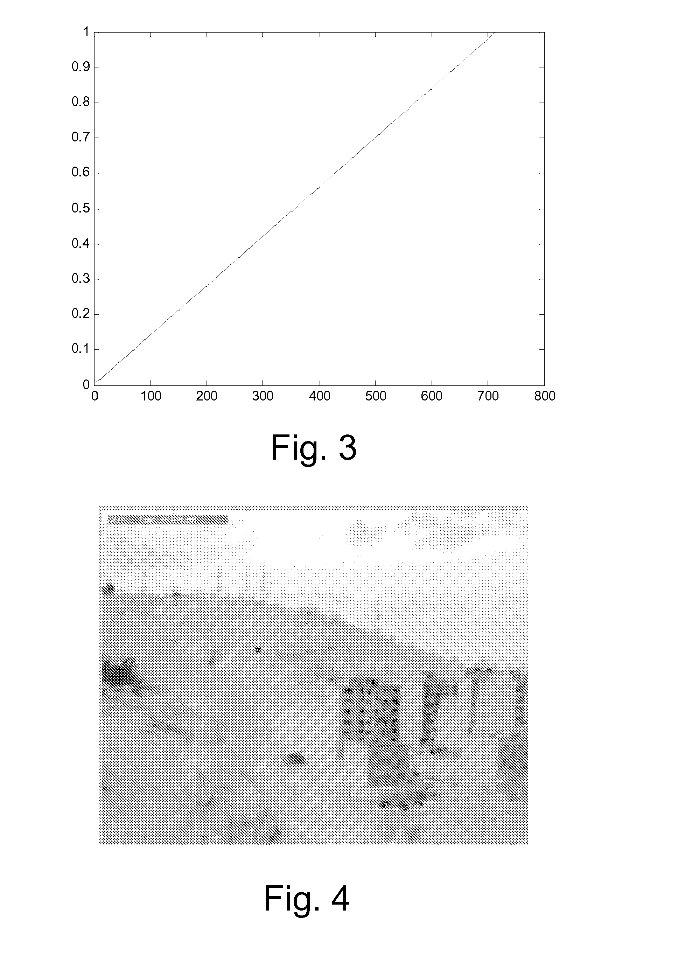

In particular, Figure 2 illustrates a compact histogram created on the basis of the histogram illustrated in Figure 1, Figure 3 illustrates the function of linear compression of the first values of intensity $n_1$ associated to the pixels of the IR image of the example on the basis of the compact histogram illustrated in Figure 2, whereas Figure 4 illustrates the IR image of the example processed by means of the technique for processing IR images provided in the patent application No. US 5,249,241 and just described.

As may be readily noted in Figure 4, the technique for processing IR images, disclosed in the patent application No. US 5,249,241, causes a loss of visibility of a large part of the details contained in the original IR image.

Another example of known art is represented by Histogram Equalization (HE) technique, which is described in Anil K. Jain, "Fundamentals of Digital Image Processing", Prentice Hall, 1989, pp. 241-242.

In particular, said technique exploits a nonlinear transformation that equalizes an image in the domain of the histogram and, at the same time, carries out compression thereof. The function of equalization of the intensities of the pixels is represented by the cumulative function normalized to one of the histogram of the intensities in the image, i.e., the integral normalized to one of the histogram, which will be referred to hereinafter simply as "cumulative function".

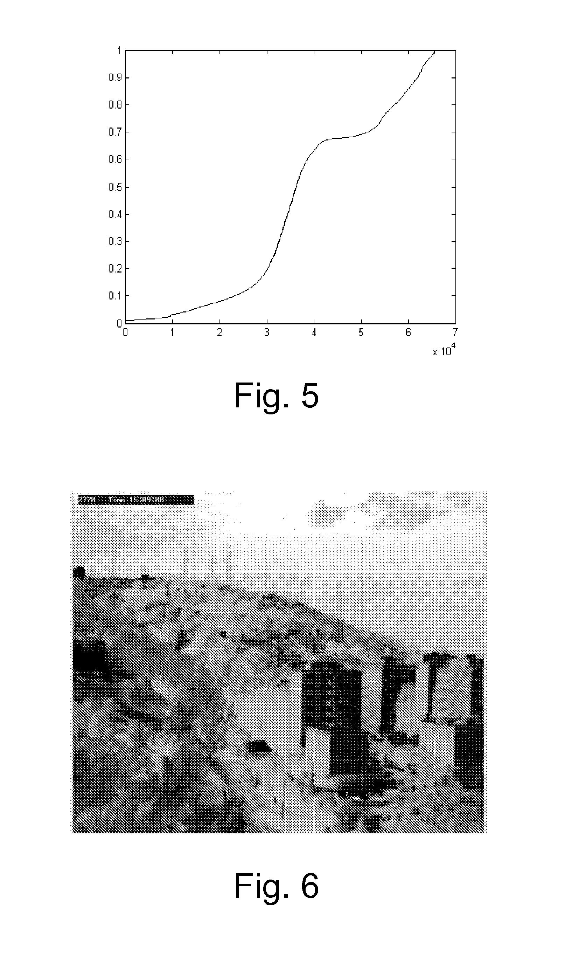

Illustrated in Figure 5 is an example of cumulative function computed on the basis of the histogram illustrated in Figure 1, whereas illustrated in Figure 6 is the IR image of the example equalized according to the HE technique by means of the cumulative function illustrated in Figure 5.

With the HE technique, the intensity levels assumed by a large number of pixels are less compressed to the detriment of the levels assumed by fewer pixels.

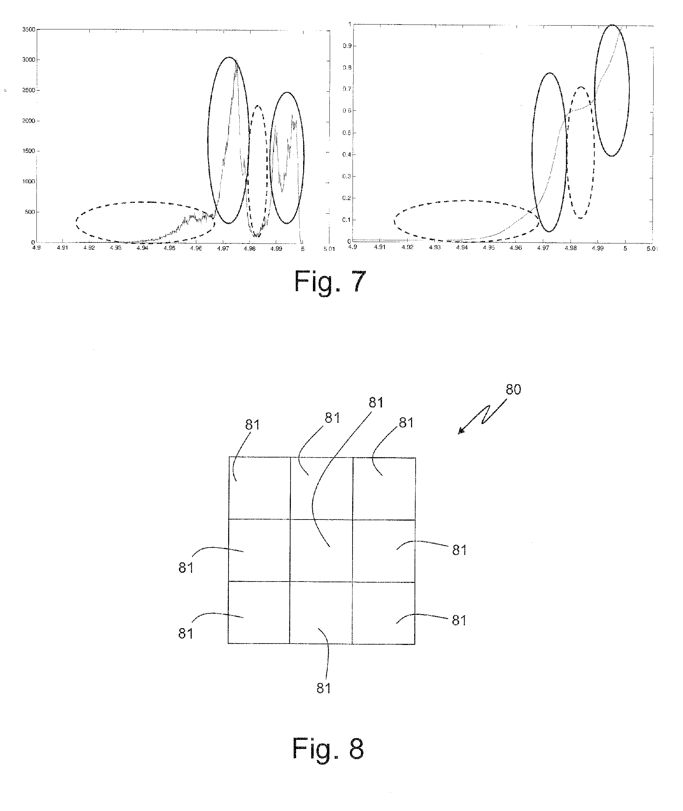

This property of the HE technique is highlighted in Figure 7 where the histogram illustrated in Figure 1 enlarged, for reasons of intelligibility, is set in comparison with the corresponding cumulative function illustrated in Figure 5.

As illustrated in Figure 7, the areas with low information content, i.e., the intensity levels assumed by a few pixels, which are highlighted with dashed lines, undergo a compression greater than the areas with high information content, i.e., the intensity levels assumed by a large number of pixels, which, instead, are highlighted with solid lines.

From what has just been said it is clear that the HE technique presents limits in the enhancement of the contrasts of small areas. In fact, the HE technique, albeit leading to results certainly better than those obtained with the technique for processing IR images of the patent application No. US 5,249,241, does not solve the problem of contrast in locally hot or locally cold areas. Said penalization derives from the fact that HE is a technique of global analysis and is far from being suited to highlight contrasts of a local type.

In order to overcome the limits of the HE technique, over the years different techniques have been developed that carry out local equalizations of the histograms.

Belonging to this family of techniques is Contrast Limited Adaptive Histogram Equalization (CLAHE) technique, which has been developed for medical applications, for example for processing X-rays images, and is described in J. Zimmerman, "An evaluation of the effectiveness of adaptive histogram equalization for contrast enhancement", IEEE Trans. On Medical Imaging, Dec. 1988, Vol. 7 No. 4 pp. 304-312, and in S. Pizer, "CLAHE: Speed and Effectiveness", IEEE, TH0311 - 1/90, 1990, pp.337-345.

Illustrated in Figure 8 is an example of application of the CLAHE technique to an image 80. In particular, with reference to Figure 8, the CLAHE technique comprises:

- dividing the image 80 into first regions 81, for example square regions, all equal to one another, referred to hereinafter as blocks;
- computing for each block 81 a corresponding histogram on the basis of the intensities of the pixels belonging to the block 81;
- for each block 81 limiting possible peaks of the corresponding histogram to a corresponding threshold value, which represents the maximum number of pixels allowed for each intensity level and is computed as percentage of the total number of pixels belonging to the block 81;
- computing for each block 81 a corresponding cumulative function of the corresponding histogram in which the peaks that exceeded the corresponding threshold value have been limited;
- equalizing the pixels in each block 81 by means of the corresponding cumulative function; and
- interpolating the intensities of the pixels arranged in areas of boundary between adjacent blocks 81.

Operatively, the limitation of the histograms of the blocks 81 is in effect performed by computing first the histogram of the block 81 under examination and, subsequently, redistributing the amount of pixels that exceed the threshold value within the histogram, increasing the values of the intensity levels below the threshold value up to exhaustion of the excesses.

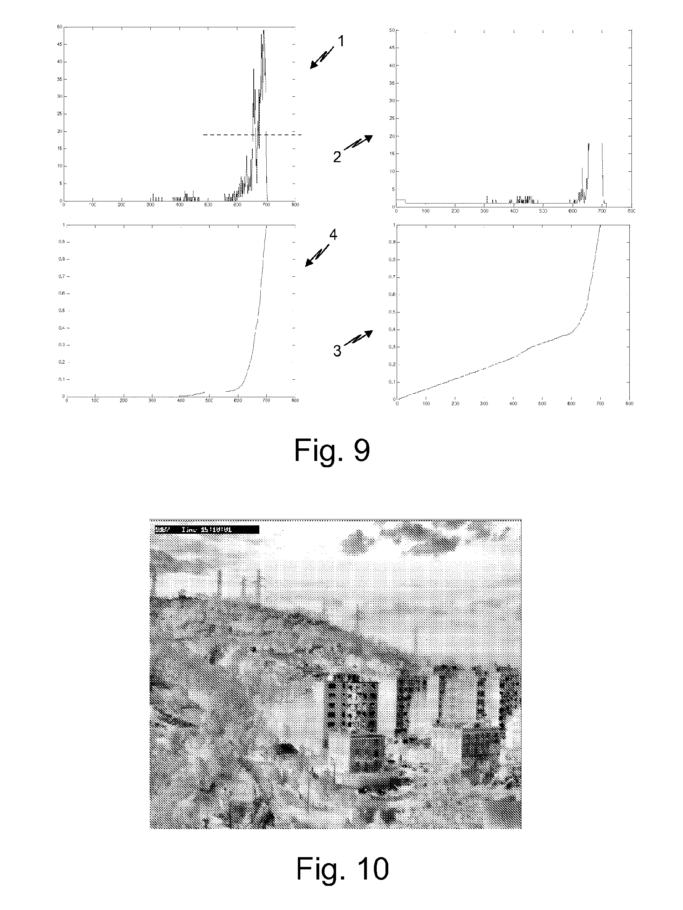

In this regard, in Figure 9 four graphs are illustrated, where:

- graph 1 shows a histogram of a block 81 together with a threshold value s that is equal to 5% of the number of pixels belonging to the block 81,
- graph 2 shows a histogram obtained from the histogram of graph 1, in which the peaks that exceeded the threshold value s have been limited and the corresponding excess amounts of pixels have been redistributed over the other intensity levels;
- graph 3 shows the cumulative function corresponding to the histogram of graph 2; and
- graph 4 shows the cumulative function corresponding to the histogram of graph 1.

From a comparison between graph 3 and graph 4 illustrated in Figure 9 it may be understood how the CLAHE technique enables elimination from the image of the noise due to the sharp variations of contrast.

On the other hand, however, the application of the CLAHE technique to an IR image, notwithstanding the interpolation of the intensities of the pixels arranged in areas of boundary between adjacent blocks 81, even so induces a block effect in the IR image, which is very evident for IR images belonging to a video flow, such as for example in the case of videos made up of IR images and acquired from thermocameras used during avionic navigation.

In addition, the redistribution of the amounts of pixels that exceed the threshold value s requires computational efforts that are not indifferent and times that cannot be shorter than 0.04 seconds, the maximum time allowed for real-time processing of IR images belonging to a video flow so that the presentation of the video is fluent.

The latter problem is not certainly felt in the case of static images coming from electromedical equipment for which the CLAHE technique has been developed, whereas it is very much felt in the case of videos made up of IR images and acquired from thermocameras used during avionic navigation.

In addition, illustrated in Figure 10 is the IR image of the example equalized using the CLAHE technique.

Another technique that carries out local equalization of the histograms is Partially Overlapped Subblock Histogram Equalization (POSHE) technique that is described in Joung Youn Kim, "An advanced contrast enhancement using partially overlapped subblock histogram equalization", IEEE Trans. On circuits and systems for Video technology, April 2001, pp. 475-483, and that has been developed in the framework of consumer videos for which low costs for implementation are required and the speed of execution is not a stringent parameter for commercial hardware.

In general, the POSHE technique envisages dividing the image into first regions, for example square ones, all the same as one another, referred to hereinafter as blocks. Using, then, a processing window that is a multiple of a block, referred to hereinafter as subblock, on the basis of the intensities of the pixels belonging to the blocks within the subblock, a histogram and the corresponding cumulative function are computed.

The intensities of the pixels belonging to the blocks within the subblock are then equalized by means of the cumulative function thus computed.

In addition, the POSHE technique envisages displacement of the subblock on the image each time by a pitch equal to the block so that each block can be subjected to one or more equalizations up to a maximum equal to the number of blocks contained in the subblock.

Typically, a subblock is as large as four blocks and, hence, each block can be subjected to up to as many as four equalizations. Consequently, the final result of each block of the image will be the average of the results of the equalizations that it has undergone.

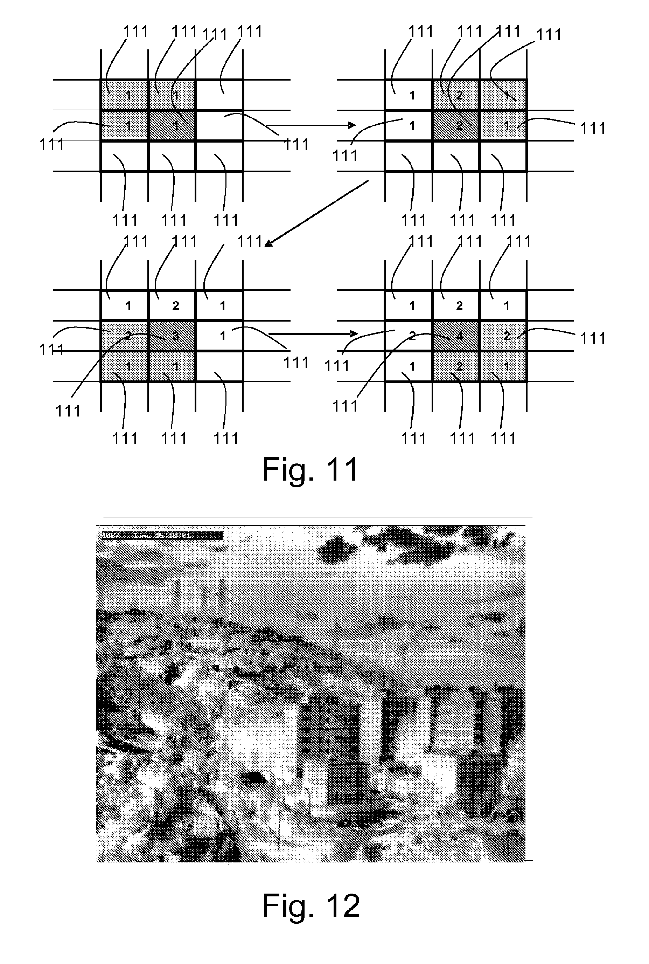

Illustrated in Figure 11 is an example of application of the POSHE technique to a region of an image divided into nine blocks 111 with subblock as large as four blocks 111.

In particular, indicated in Figure 11 is the number of equalizations that the nine blocks 111 undergo for each of the four displacements of the subblock that involves them.

Illustrated in Figure 12 is the IR image of the example equalized by means of the POSHE technique.

An IR image equalized using the POSHE technique, albeit not affected by residual block effect, is affected by that type of noise that in the literature is known as "salt-and-pepper effect".

Finally, another family of image-processing techniques is represented by the techniques that extract from the image the part with high spatial frequency (HF), then amplify it and recombine it with the spatial part with low spatial frequency (LF) in order to enhance the local contours.

A technique that belongs to this family is the Local Contour Enhancement (LCE) technique, which is described in Eli Peli, "Image Enhancement for the visually Impaired Optical Engineering", 1984, Vol. 23, N.1, pp. 47-51.

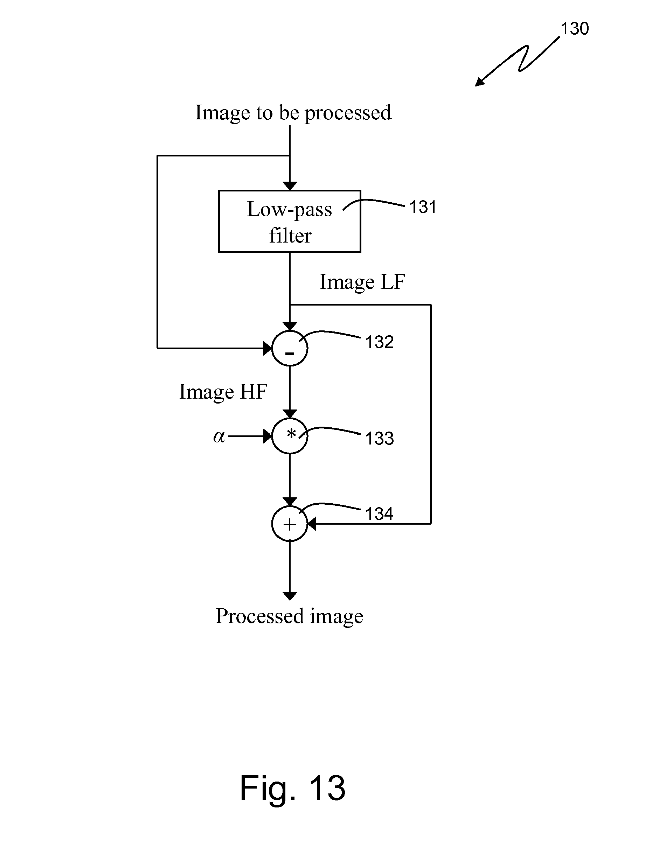

In particular, illustrated in Figure 13 is a flowchart of a processing 130 of an image according to the LCE technique. In detail, as illustrated in Figure 13, given an image to be processed, the processing 130 comprises:

- filtering the image to be processed with a low-pass filter (block 131), thus obtaining an LF image that contains only the low spatial frequencies of the image to be processed, the low-pass filter (block 131) being conveniently obtained by means of a sliding window, which is slid over the entire image to be processed and averages the intensities of the pixels inside it;
- subtracting (block 132) the LF image from the image to be processed, thus obtaining an image HF that contains only the high spatial frequencies of the image to be processed;

- amplifying (block 133) the HF image by multiplying the intensities of the pixels by an amplification factor $\alpha$; and
- adding (block 134) the amplified HF image to the LF image, thus obtaining an image processed by means of the LCE technique.

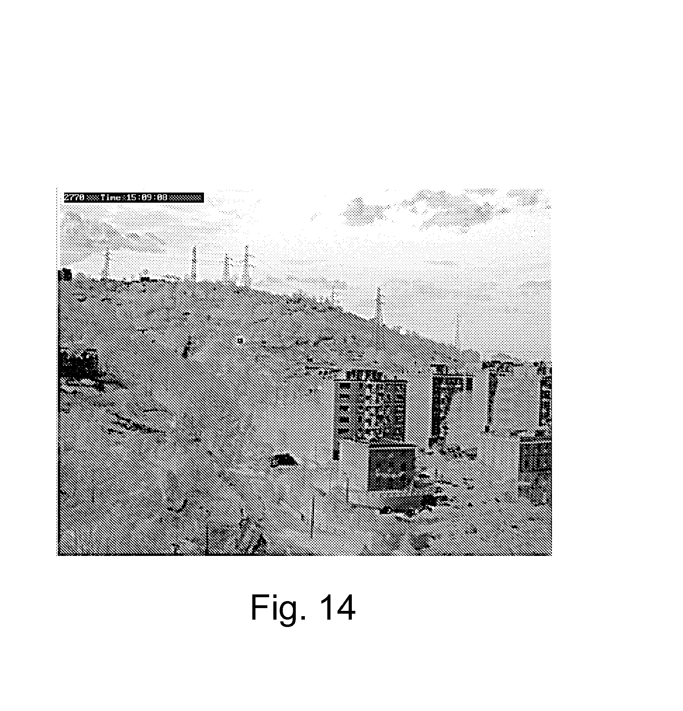

In addition, Figure 14 illustrates the IR image of the example processed by means of the LCE technique.

From Figure 14 it may be understood how the IR images processed with the LCE technique present certainly better local contours than images processed with other techniques, for example with the HE technique, as emerges from a comparison between Figure 14 and Figure 6. At the same time, however, the IR images processed with the LCE technique are globally flat and devoid of depth, i.e., with poor global contrast.

The present applicant has noted that the techniques for processing images just described present various disadvantages, some of which have already been anticipated, above all if used for processing IR images, in particular when the IR images are sensed by thermocameras in conditions of marked dynamicity.

In particular, the CLAHE technique causes a block effect on very uniform regions of an IR image characterized by a low thermal gradient, where the interpolation technique does not fully manage to recover the uniformity starting from the blocks. Operatively, such a situation arises in the presence of a cold, typically night, sky.

In addition, the CLAHE technique also causes the presence in the IR images of regular patterns, such as highly fluctuating light and dark halos. This effect is not appreciable in static IR images, but is very visible in moving IR images and derives from entry and exit of locally hot sources into/from the processing blocks of the IR images. This effect can be encountered in the presence of trees or hot cement structures when the surrounding environment is colder, for example a tree having as background a cold sky.

The two aforesaid problems of the CLAHE technique render it far from being suited for applications based upon IR images acquired from thermocameras of avionic platforms. In fact, the block effect and the regular patterns are very visible in conditions of high dynamicity and said conditions are typical of avionic navigation, for which, for example, a fast rotation in azimuth of the thermocamera with inclination of the field of view of *45°* is a typical situation during the turning manoeuvres of aircraft.

In addition, the computation times of the CLAHE technique, which in the processing of static images coming from electromedical equipment, which is the field in which said technique was devised, do not cause any problem, create, instead, many problems in processing, frequently in real time, IR images sensed by thermocameras in avionic navigation on account of the construction of many histograms before, and of the limitation with allocation of the excesses after.

As regards, instead, the POSHE technique, this causes, as has already been mentioned previously, a salt-and-pepper effect.

Finally, the LCE technique has a recognized defect, known in the literature as "halo effect" or "aureole effect", which consists in the addition of a white halo in the proximity of the contours that have been emphasized. Said effect is frequently visible where the amplification and filtering factors used are very high.

Consequently, the aim of the present invention is to provide a method for equalizing an image that will be able to mitigate the disadvantages just mentioned.

The aforesaid aim is achieved by the present invention in so far as it relates to a method for equalizing an image, the essential characteristics of which are defined in Claim 1 and the preferred and/or auxiliary characteristics of which are defined in Claims 2 to 9, as well as to a image-processing method comprising said equalization method, the basic characteristics of said processing method being defined in Claim 10 and the preferred and/or auxiliary characteristics of said processing method being defined in Claims 11 and 12.

For a better understanding of the present invention, some preferred embodiments, provided purely by way of explanatory and non-limiting example, will now be illustrated with reference to the annexed drawings (not all in scale), wherein:

- Figure 1 shows a histogram of the intensities of the pixels in an IR image of the example;
- Figure 2 shows a compact histogram created on the basis of the histogram of Figure 1 according to a given known IR-image-processing technique;
- Figure 3 shows a function of linear compression exploited by the given known IR-image-processing technique;
- Figure 4 shows the IR image of the example processed by means of the given known IR-image-processing technique;
- Figure 5 shows a cumulative function normalized to one of the histogram of Figure 1;
- Figure 6 shows the IR image of the example equalized by means of a histogram-equalization technique;
- Figure 7 shows a comparison between the histogram of Figure 1 and the corresponding cumulative function normalized to one of Figure 5;
- Figure 8 is a schematic illustration of an example of application of a CLAHE (Contrast Limited Adaptive Histogram Equalization) technique;
- Figure 9 represents four graphs, in which a first graph shows a histogram of the intensities of the pixels in a region of an image together with a threshold value, a second graph shows a histogram obtained from the histogram of the first graph in which the peaks that exceeded the threshold value have been limited and the corresponding excess amounts of pixels have been redistributed over the other intensity levels, a third graph shows a cumulative function normalized to one computed on the basis of the histogram of the second graph, and a fourth graph shows a cumulative function normalized to one computed on the basis of the histogram of the first graph;

- Figure 10 shows the IR image of the example equalized by means of a CLAHE technique;
- Figure 11 is a schematic illustration of an example of application to a region of an image of a histogram-equalization technique based upon partially overlapped subblocks;
- Figure 12 shows the IR image of the example equalized by means of a histogram-equalization technique based upon partially overlapped subblocks;
- Figure 13 is a schematic illustration of processing of an image that exploits a technique of enhancement of the local contour;
- Figure 14 shows the IR image of the example processed by means of the processing of Figure 13;
- Figure 15 is a schematic illustration of a image-equalization method according to the present invention;
- Figure 16 is a schematic illustration of a matrix of pixels that forms an image to be equalized with the method of Figure 15;
- Figure 17 is a schematic illustration of a first division in blocks of the matrix of pixels of Figure 16 according to the method of Figure 15;
- Figure 18 shows in greater detail a first step of the method of Figure 15;
- Figure 19 is a schematic illustration of an operation executed during the step of Figure 18 of the method of Figure 15;
- Figure 20 is a schematic illustration of a second division in blocks of the matrix of pixels of Figure 16 according to the method of Figure 15;
- Figure 21 shows in greater detail a second step of the method of Figure 15;
- Figure 22 is a schematic illustration of an image-processing method according to the present invention; and
- Figure 23 shows the IR image of the example processed by means of the processing method of Figure 22.

The ensuing description is provided to enable a person skilled in the sector to reproduce and use the invention.

Various modifications to the embodiments presented will be immediately evident to persons skilled in the branch, and the generic principles disclosed herein could be applied to other embodiments and applications, without thereby departing from the sphere of protection of the present invention.

Hence, the present invention is not to be understood as being limited just to the embodiments described and illustrated, but it must be granted the widest sphere of protection consistently with the principles and characteristics presented herein and defined in the annexed claims.

In addition, the present invention is implemented by means of a computer program comprising code portions configured to implement, when the computer program is loaded into the memory of an electronic processor and run on said electronic processor, the image-equalization method and/or the image-processing method described hereinafter.

The present invention stems from an in-depth study conducted by the Applicant in order to investigate the possibility of developing a new technique for processing IR images that might exploit the strong points of the known techniques but that at the same time might be free from the problems linked thereto.

In particular, during said study the present applicant has realized that:

- a limitation of the histograms avoids the problem of the salt-and-pepper effect;
- the use of a subblock for the computation of the equalization functions avoids the problem of the block effect and of the presence of regular patterns; and
- an interpolation helps to reduce the block effect.

Starting from these three intuitions, the present applicant has hence developed an image-equalization method that forms the subject of the present invention.

In addition, on the basis of said image-equalization method, the present applicant has also developed an image-processing method that also forms the subject of the present invention.

In particular, according to the present invention, in the first place, a new image-equalization method is provided.

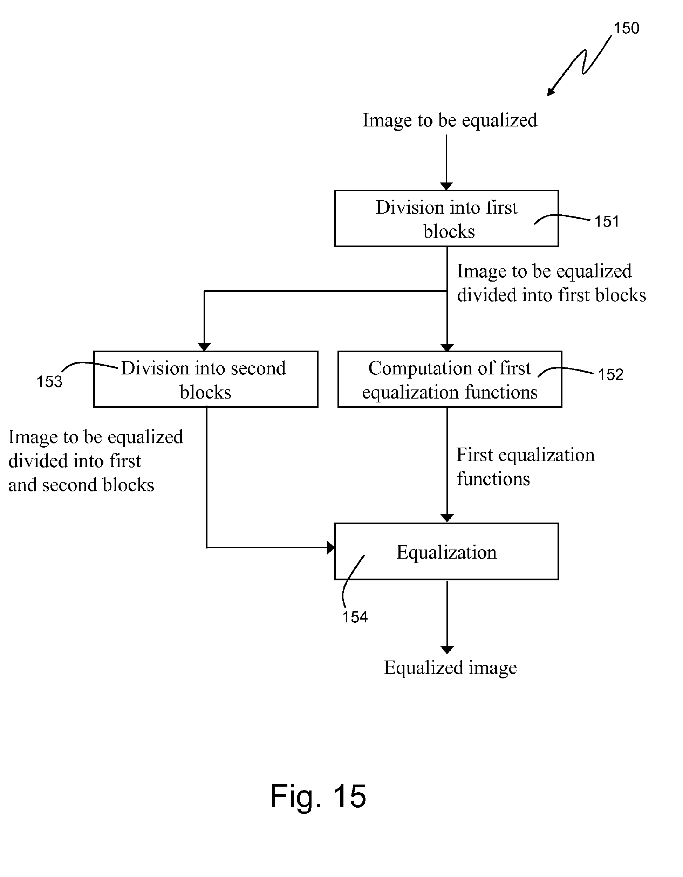

In this regard, illustrated in Figure 15 is a block diagram of an image-equalization method 150 according to the present invention.

In detail, as illustrated in Figure 15, given an image to be equalized constituted by a matrix of pixels made up, precisely, of pixels and having a first number of columns $N_{IC}$ and a first number of rows $N_{IR}$, and where each pixel assumes a corresponding intensity level comprised in a given set of intensity levels $[I_0, I_{MAX}]$ that comprises all the intensity levels that may be assumed by the pixels of the image to be equalized, the equalization method 150 comprises:

- a division into first blocks (block 151) of the image to be equalized;
- a computation of first equalization functions (block 152) on the basis of the image to be equalized divided into first blocks;
- a division into second blocks (block 153) of the image to be equalized divided into first blocks; and
- an equalization (block 154) of the image to be equalized divided into first and second blocks on the basis of the first equalization functions computed.

In detail, the division into first blocks (block 151) comprises dividing the image to be equalized into first non-overlapping regions, referred to hereinafter as first blocks, each of which is a submatrix of the matrix of pixels that has a second number of columns $N_{BC}$ and a second number of rows $N_{BR}$, the second number of columns $N_{BC}$ being an integer submultiple of the first number of columns $N_{IC}$ and the second number of rows $N_{BR}$ being an integer submultiple of the first number of rows $N_{IR}$.

Conveniently, the first blocks can be square, i.e., have the second number of columns $N_{BC}$ equal to the second number of rows $N_{BR}$.

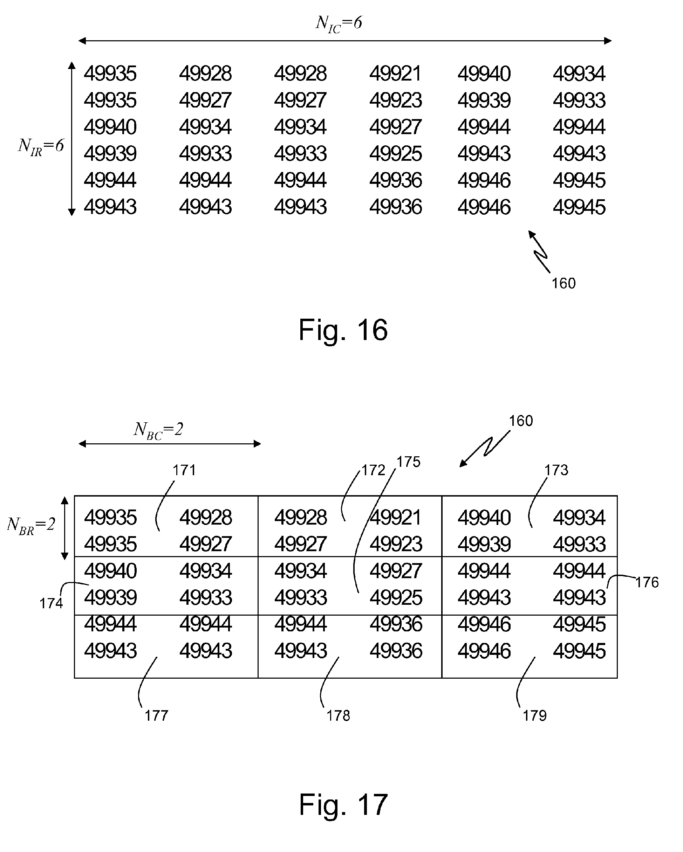

In relation to the division into first blocks (block 151), illustrated in Figure 16 is an example of image to be equalized constituted by a matrix of pixels 160 that has the first number of columns $N_{IC}$ equal to *6* and the first number of rows $N_{IR}$, which is also equal to *6,* and where the intensity levels assumed by the 36 pixels that form the matrix of pixels 160 are illustrated, whilst illustrated in Figure 17 is the matrix of pixels 160 divided into 9 first blocks, each of which is indicated in Figure 17 with a respective number comprised between 171 and 179 and has the second number of columns $N_{BC}$ equal to 2 and the second number of rows $N_{BR}$, which is also equal to *2.*

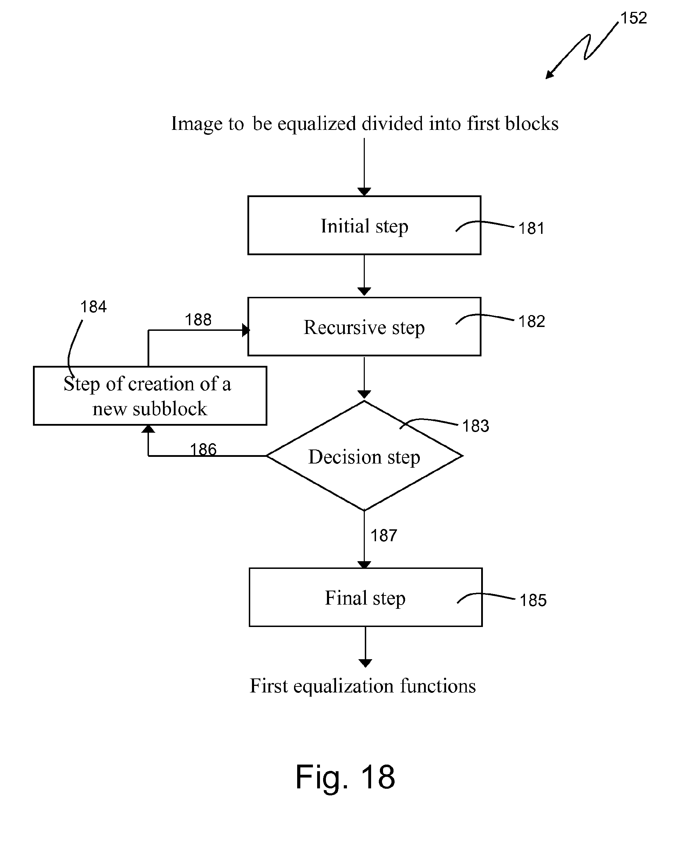

In addition, illustrated in Figure 18 is a flowchart of the computation of first equalization functions (block 152).

In particular, as illustrated in Figure 18, the computation of first equalization functions (block 152) comprises:

- an initial step (block 181);
- a recursive step (block 182);
- a decision step (block 183);
- a step of creation of a new subblock (block 184); and
- a final step (block 185).

In detail, the initial step (block 181) in turn comprises creating a subblock that groups a number $N_{SB}$ of first adjacent blocks in the image to be equalized divided into first blocks, the subblock hence containing a total number of pixels $N_{SP}$ equal to $N_{SB}*N_{BC}*N_{BR}$.

Conveniently, the number $N_{SB}$ of the first adjacent blocks grouped in the subblock can be equal to *4.*

In addition, the recursive step (block 182) comprises:

- computing a limited histogram that comprises for each intensity level *I* comprised in the given set of intensity levels $[I_0, I_{MAX}]$ a corresponding number of pixels $P_I$, each pixel *j* contained in the subblock being counted in the number of pixels $P_I(j)$ that corresponds to its own intensity level $I(j)$ if said number of pixels $P_{I(j)}$ that corresponds to the intensity level $I(j)$ of said pixel *j* is lower than an allowed maximum number of pixels $P_{MAX}$, and otherwise said pixel *j* being counted in the number of pixels $P_I$, that corresponds to an intensity level *I'* different from the intensity level $I(j)$ of said pixel *j*, i.e., I'≠I(j), said number of pixels $P_I$, that corresponds to an intensity level *I'* different from the intensity level $I(j)$ of said pixel *j* being lower than said allowed maximum number of pixels $P_{MAx}$, said allowed maximum number of pixels $P_{MAX}$ being computed as percentage of the total number of pixels $N_{SP}$, for example $P_{MAX}$ can be equal to 5% of $N_{SP}$;
- computing a cumulative function that comprises for each intensity level *I* comprised in the given set of intensity levels $[I_0, I_{MAX}]$ a corresponding cumulative value $C_I$, each cumulative value $C_I$ being equal to a ratio that has as denominator the total number of pixels $N_{SP}$ and as numerator a sum $\Sigma P_i$ of the numbers of pixels $P_i$ comprised in the limited histogram computed and corresponding to the intensity levels *i* lower than or equal to the corresponding intensity level *I,* i.e., using a mathematical formalism, we have

$$C_I = \frac{\sum_{i=I_0}^{I} P_i}{N_{SP}}$$

- storing the cumulative function computed in a number of first storage elements equal to the number $N_{SB}$ of the first adjacent blocks contained in the subblock, each first storage element corresponding to a respective first block of the $N_{SB}$ first adjacent blocks contained in the subblock.

On the basis of what has just been described, the aim here is to emphasize how during the recursive step (block 182) the limited histograms are computed by counting the generic pixel $j$ contained in the subblock in the number of pixels $P_{I(j)}$ that corresponds to the intensity level $I(j)$ assumed by the generic pixel $j$ as long as said number of pixels $P_{I(j)}$ is lower than the allowed maximum number of pixels $P_{MAX}$, and otherwise the generic pixel $j$ is counted in another number of pixels $P_{I'}$, with $I'{\neq}I(j)$, which has not yet reached the allowed maximum number of pixels $P_{MAX}$.

Consequently, according to the present invention, the histograms are saturated at a maximum value of amplitude, i.e., the allowed maximum number of pixels $P_{MAX}$, already in a step of creation, unlike what occurs in the CLAHE technique, which envisages, first, computation of the histograms of the blocks and, then, limitation thereof by redistributing the excess amounts of pixels.

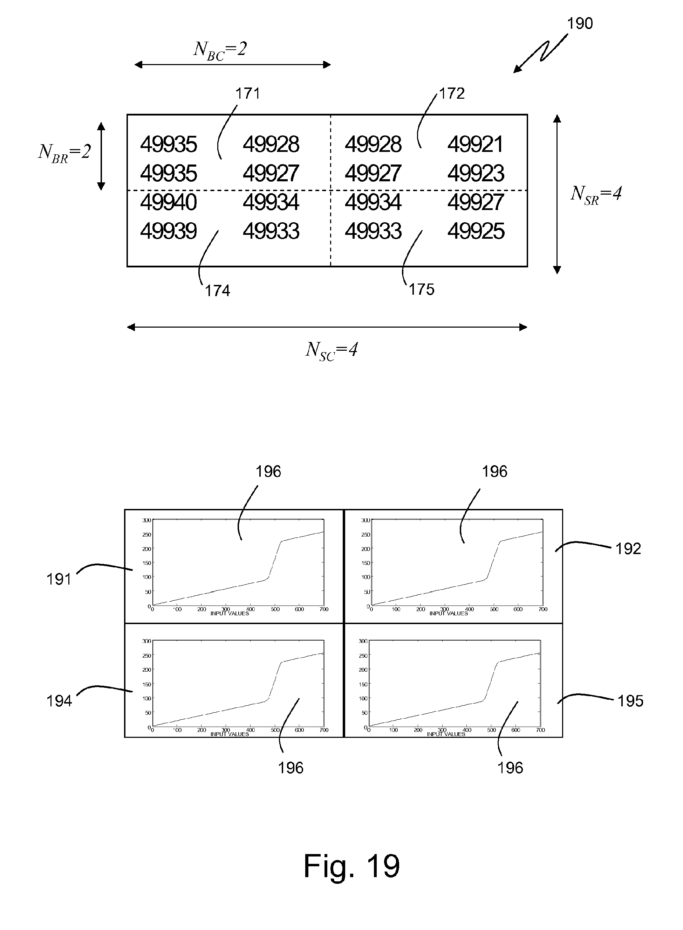

In relation to the recursive step (block 182), illustrated in Figure 19 is a subblock 190 that contains the pixels of the first blocks 171, 172, 174 and 175 of the image to be equalized constituted by the matrix of pixels 160.

In particular, as illustrated in Figure 19, the subblock 190 has a third number of columns $N_{SC}$ equal to $2*N_{BC}=4$ and a third number of rows $N_{SR}$ equal to $2*N_{BR}=4$.

Figure 19 also shows four first storage elements, designated, respectively, by 191, 192, 194 and 195, stored in which is a cumulative function 196 computed on the basis of the levels of intensity of the pixels contained in the subblock 190, i.e., on the basis of the levels of intensity of the pixels in the first blocks 171, 172, 174 and 175 of the image to be equalized constituted by the matrix of pixels 160.

In addition, once again with reference to Figure 18, the decision step (block 183) comprises:

- passing to the step of creation of a new subblock (block 184), through a branch designated by 186, if each first block of the image to be equalized divided into first blocks has not been contained in at least one subblock; or
- passing to the final step (block 185), through a branch designated by 187, if each first block of the image to be equalized divided into first blocks has, instead, been contained in at least one subblock.

In turn, the step of creation of a new subblock (block 184) comprises creating a new subblock that contains $N_{SB}/2$ first blocks already contained in the preceding subblock and $N_{SB}/2$ first blocks adjacent, in the image to be equalized divided into first blocks, to the $N_{SB}/2$ first blocks contained in the new subblock and already contained in the preceding subblock.

In other words, each new subblock overlaps by 50% the preceding subblock. Conveniently, said overlapping can be increased, by further fractioning the subblock.

Furthermore, conveniently each new subblock is created by displacing onto the image to be equalized divided into first blocks the preceding subblock by a pitch equal, each time, to the second number of columns $N_{BC}$ or to the second number of rows $N_{BR}$.

For instance, with reference to Figures 17 and 19, the new subblock created after the subblock 190 contains the first blocks 172, 173, 175 and 176.

Then, as illustrated in Figure 18, once the step of creation of a new subblock (block 184) is through, control passes again, through a branch designated by 188, to the recursive step (block 182), which is performed on the new subblock created.

In addition, as mentioned previously, when each first block of the image to be equalized divided into first blocks has been contained in at least one subblock, from the decision step (block 183) control passes, through the branch 187, to the final step (block 185) of the computation of first equalization functions (block 152) of the equalization method 150.

With reference to Figures 17 and 19, on account of the way in which the algorithm of the computation of first equalization functions (block 152) has been developed and described, the condition that each first block of the image to be equalized divided into first blocks has been contained in at least one subblock is satisfied when there have been created:

- the subblock 190;
- a subblock containing the first blocks 172, 173, 175 and 176;
- a subblock containing the first blocks 175, 176, 178 and 179; and
- a subblock containing the first blocks 174, 175, 177 and 178.

In addition, once again with reference to Figures 17 and 19, when the condition that each first block has been contained in at least one subblock is satisfied, we also have:

- the first storage element 191, which corresponds to the first block 171 and stored in which is the cumulative function 196 computed on the basis of the levels of intensity of the pixels in the first blocks 171, 172, 174 and 175;
- the first storage element 192, which corresponds to the first block 172 and stored in which is the cumulative function 196 computed on the basis of the levels of intensity of the pixels in the first blocks 171, 172, 174 and 175;
- a first storage element, which corresponds to the first block 172 and stored in which is a cumulative function computed on the basis of the levels of intensity of the pixels in the first blocks 172, 173, 175 and 176;
- a first storage element, which corresponds to the first block 173 and stored in which is the cumulative function computed on the basis of the levels of intensity of the pixels in the first blocks 172, 173, 175 and 176;
- the first storage element 194, which corresponds to the first block 174 and stored in which is the cumulative function 196 computed on the basis of the levels of intensity of the pixels in the first blocks 171, 172, 174 and 175;
- a first storage element, which corresponds to the first block 174 and stored in which is a cumulative function computed on the basis of the levels of intensity of the pixels in the first blocks 174, 175, 177 and 178;
- the first storage element 195, which corresponds to the first block 175 and stored in which is the cumulative function 196 computed on the basis of the levels of intensity of the pixels in the first blocks 171, 172, 174 and 175;
- a first storage element, which corresponds to the first block 175 and stored in which is the cumulative function computed on the basis of the levels of intensity of the pixels in the first blocks 172, 173, 175 and 176;
- a first storage element, which corresponds to the first block 175 and stored in which is the cumulative function computed on the basis of the levels of intensity of the pixels in the first blocks 174, 175, 177 and 178;
- a first storage element, which corresponds to the first block 175 and stored in which is a cumulative function computed on the basis of the levels of intensity of the pixels in the first blocks 175, 176, 178 and 179;
- a first storage element, which corresponds to the first block 176 and stored in which is the cumulative function computed on the basis of the levels of intensity of the pixels in the first blocks 172, 173, 175 and 176;
- a first storage element, which corresponds to the first block 176 and stored in which is the cumulative function computed on the basis of the levels of intensity of the pixels in the first blocks 175, 176, 178 and 179;
- a first storage element, which corresponds to the first block 177 and stored in which is the cumulative function computed on the basis of the levels of intensity of the pixels in the first blocks 174, 175, 177 and 178;
- a first storage element, which corresponds to the first block 178 and stored in which is the cumulative function computed on the basis of the levels of intensity of the pixels in the first blocks 174, 175, 177 and 178;
- a first storage element, which corresponds to the first block 178 and stored in which is the cumulative function computed on the basis of the levels of intensity of the pixels in the first blocks 175, 176, 178 and 179; and
- a first storage element, which corresponds to the first block 179 and stored in which is the cumulative function computed on the basis of the levels of intensity of the pixels in the first blocks 175, 176, 178 and 179.

Then, the final step (block 185) of the computation of first equalization functions (block 152) of the equalization method 150 comprises:

- computing for each first block of the image to be equalized divided into first blocks a corresponding first equalization function obtained by averaging the cumulative functions stored in the first storage elements corresponding to the first block; and
- storing for each first block of the image to be equalized divided into first blocks the corresponding first equalization function in a second storage element that corresponds to the first block.

In particular, given a generic first block that has been contained in $M$ subblocks and for which, hence, $M$ first storage elements have been created, each containing a respective cumulative function, the corresponding first equalization function assumes for each intensity level $I$ comprised in the given set of intensity levels $[I_0, I_{MAX}]$ a respective value $V(I)$ computed as:

$$V(I) = \frac{\sum_{k=1}^{M} C_{I,k}}{M}$$

where $C_{I,k}$ is the cumulative value assumed at the intensity level $I$ by the cumulative function stored in the $k$-th first storage element.

Consequently, at the end of the computation of first equalization functions (block 152) we have for each first block of the image divided into first blocks a corresponding first equalization function stored in a corresponding second storage element.

Once again with reference to Figure 15, the division into second blocks (block 153) comprises dividing the image divided into first blocks into second non-overlapping regions, referred to hereinafter as second blocks.
In particular, the second blocks can be of three types:

- second blocks of a first type having the same dimensions $N_{BR}$ x $N_{BC}$ as the first blocks, each second block of the first type being centred in a corresponding boundary point between four corresponding first blocks and comprising a corresponding quarter of the pixels of each of the four corresponding first blocks;
- second blocks of a second type having dimensions $N_{BR}$ x $(N_{BC}/2)$ or $(N_{BR}/2)$ x $N_{BC}$, each second block of the second type being constituted by a corresponding edge region of the image to be equalized divided into first blocks and comprising a corresponding quarter of the pixels of two corresponding first blocks; and
- second blocks of a third type having dimensions $(N_{BR}/2)$ x $(N_{BC}/2)$, each second block of the third type being constituted by a corresponding corner region of the image to be equalized divided into first blocks and comprising a corresponding quarter of the pixels of a corresponding first block.

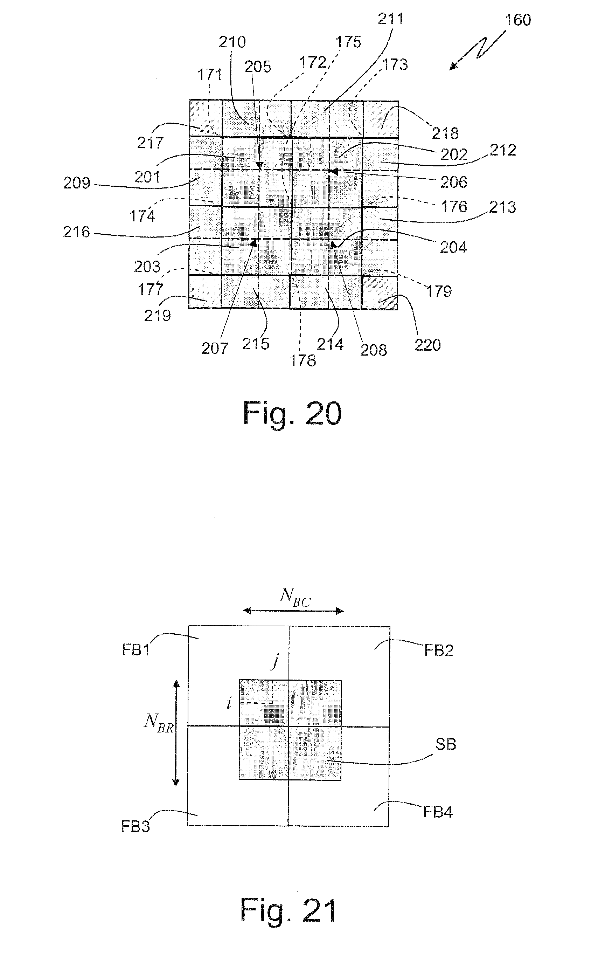

In this regard, illustrated in Figure 20 is an example of application of the division into second blocks (block 153) to the image constituted by the matrix of pixels 160 and divided into the first blocks 171-179.
In particular, as illustrated in Figure 20:

- a second block of the first type 201 is centred in a boundary point 205 among the first blocks 171, 172, 174 and 175 and comprises a corresponding quarter of the pixels, respectively, of the first block 171, of the first block 172, of the first block 174, and of the first block 175;
- a second block of the first type 202 is centred in a boundary point 206 among the first blocks 172, 173, 175 and 176 and comprises a corresponding quarter of the pixels, respectively, of the first block 172, of the first block 173, of the first block 175, and of the first block 176;
- a second block of the first type 203 is centred in a boundary point 207 among the first blocks 174, 175, 177 and 178 and comprises a corresponding quarter of the pixels, respectively, of the first block 174, of the first block 175, of the first block 177, and of the first block 178;
- a second block of the first type 204 is centred in a boundary point 208 among the first blocks 175, 176, 178 and 179 and comprises a corresponding quarter of the pixels, respectively, of the first block 175, of the first block 176, of the first block 178, and of the first block 179;
- a second block of the second type 209 is constituted by a corresponding edge region of the image to be equalized divided into first blocks and comprises a corresponding quarter of the pixels, respectively, of the first block 171 and of the first block 174;
- a second block of the second type 210 is constituted by a corresponding edge region of the image to be equalized divided into first blocks and comprises a corresponding quarter of the pixels, respectively, of the first block 171 and of the first block 172;
- a second block of the second type 211 is constituted by a corresponding edge region of the image to be equalized divided into first blocks and comprises a corresponding quarter of the pixels, respectively, of the first block 172 and of the first block 173;
- a second block of the second type 212 is constituted by a corresponding edge region of the image to be equalized divided into first blocks and comprises a corresponding quarter of the pixels, respectively, of the first block 173 and of the first block 176;
- a second block of the second type 213 is constituted by a corresponding edge region of the image to be equalized divided into first blocks and comprises a corresponding quarter of the pixels, respectively, of the first block 176 and of the first block 179;
- a second block of the second type 214 is constituted by a corresponding edge region of the image to be equalized divided into first blocks and comprises a corresponding quarter of the pixels, respectively, of the first block 178 and of the first block 179;
- a second block of the second type 215 is constituted by a corresponding edge region of the image to be equalized divided into first blocks and comprises a corresponding quarter of the pixels, respectively, of the first block 177 and of the first block 178;
- a second block of the second type 216 is constituted by a corresponding edge region of the image to be equalized divided into first blocks and comprises a corresponding quarter of the pixels, respectively, of the first block 174 and of the first block 177;
- a second block of the third type 217 is constituted by a corresponding corner region of the image to be equalized divided into first blocks and comprises a corresponding quarter of the pixels of the first block 171;
- a second block of the third type 218 is constituted by a corresponding corner region of the image to be equalized divided into first blocks and comprises a corresponding quarter of the pixels of the first block 173;

- a second block of the third type 219 is constituted by a corresponding corner region of the image to be equalized divided into first blocks and comprises a corresponding quarter of the pixels of the first block 177; and
- a second block of the third type 220 is constituted by a corresponding corner region of the image to be equalized divided into first blocks and comprises a corresponding quarter of the pixels of the first block 179.

Finally, in order obtain an equalized image, the equalization (block 154) comprises, for each second block, equalizing the intensity level assumed by each pixel in the second block by means of a second equalization function computed on the basis of an interpolation of the first equalization functions stored in the second storage elements corresponding to the first blocks corresponding to the second block.

In particular, the interpolation of the first equalization functions is preferably a bilinear interpolation.

Described in greater detail hereinafter is the equalization (block 154) based upon a bilinear interpolation of the first equalization functions.

In this regard, illustrated in Figure 21 is a second block (SB) of the first type that overlaps four corresponding first blocks FB1, FB2, FB3 and FB4 and that comprises a corresponding quarter of the pixels, respectively, of the first block FB1, of the first block FB2, of the first block FB3, and of the first block FB4.

A pixel comprised in the second block SB is identified within the second block SB by a corresponding pair of indices $(i,j)_{SB}$, where the index $i$ is an integer comprised between $1$ and $N_{BR}$ and the index $j$ is an integer comprised between $1$ and $N_{BC}$, and assumes a corresponding intensity level $I((i,j)_{SB})$ not yet equalized comprised in the given set of intensity levels $[I_0, I_{MAX}]$. Downstream of the equalization (block 154) the pixel $(i,j)_{SB}$ will assume a corresponding equalized intensity level $I^{eq}((i,j)_{SB})$.

In addition, during computation of first equalization functions (block 152) for the first block FB1 a corresponding first equalization function $UL(I)$ (UL - Upper Left) has been computed, for the first block FB2 a corresponding first equalization function $UR(I)$ (UR - Upper Right) has been computed, for the first block FB3 a corresponding first equalization function $BL(I)$ (BL - Bottom Left) has been computed, and for the first block FB4 a corresponding first equalization function $BR(I)$ (BR - Bottom Right), where $I$ is an intensity level comprised in the given set of intensity levels $[I_0, I_{MAX}]$.

The equalization (block 154) envisages equalizing the intensity level $I((i,j)_{SB})$ of each pixel $(i,j)_{SB}$ of the second block SB, assigning to the pixel $(i,j)_{SB}$, a corresponding equalized intensity level $I^{eq}((i,j)_{SB})$ computed according to the following equation:

$$
\begin{aligned}
(1) \quad I^{eq}((i,j)_{SB}) = & ((UL(I((i,j)_{SB})) * (N_{BR}-i) * (N_{BC}-i)) + \\
& + (UR(I((i,j)_{SB})) * (N_{BR}-i) * (j-1)) + \\
& + (BL(I((i,j)_{SB})) * (i-1) * (N_{BC}-j)) + \\
& + (BR(I((i,j)_{SB})) * (i-1) * (j-1))) / ((N_{BR}-1) * (N_{BC}-1))
\end{aligned}
$$

In other words, assigned to each pixel $(i,j)_{SB}$ of the second block SB is a corresponding equalized intensity level $I^{eq}((i,j)_{SB})$ computed on the basis of respective values assumed by the first equalization functions $UL(I((i,j)_{SB}))$' $UR(I((i,j)_{SB}))$, $BL(I((i,j)_{SB}))$ and $BR(I((i,j)_{SB}))$ at the non-equalized intensity level $I((i,j)_{SB})$ of the pixels $(i,j)_{SB}$.

In addition, for each first equalization function the respective value assumed at the non-equalized intensity level of the pixel is weighted by multiplying it by a corresponding weighting factor that takes into account the complement of the distance, expressed in terms of rows and columns, between the pixel and a corresponding corner pixel of the second block, said corner pixel being the corner pixel of the second block that belongs to the first block corresponding to the first equalization function.

In this way, in the equalization (block 154) of the intensity level of a pixel more weight is given to the first equalization function corresponding to the first block to which the pixel belongs.

For example, once again with reference to Figure 21, if the pixel considered is the corner pixel $(1,1)_{SB}$ of the second block SB, on the basis of the equation (1) the corresponding equalized intensity level $I^{eq}((1,1)_{SB})$ is equal to $UL(I((1,1)_{SB}))$, i.e., the corner pixel $(1,1)_{SB}$ is equalized only by means of the first equalization function $UL(I)$ that corresponds to the first block FB1.

Likewise, for the corner pixel $(1,N_{BC})_{SB}$ the corresponding equalized intensity level $I^{eq}((1,N_{BR})_{SB})$ is equal to $UR(I((1,N_{BC})_{SB}))$ for the corner pixel $(N_{BR},1)_{SB}$ the corresponding equalized intensity level $I^{eq}((N_{BR},1)_{SB})$ is equal to $BL(I((N_{BR},1)_{SB}))$, and for the corner pixel $(N_{BR},N_{BC})_{SB}$ the corresponding equalized intensity level $I^{eq}((N_{BR},N_{BC})_{SB})$ is equal to $BR(I((N_{BR},N_{BC})_{SB}))$.

In addition, from the equation (1), the following equation (2) can be readily obtained:

$$(2) \quad I^{eq}((i,j)_{SB}) = ((N_{BR}-i)*(L_{UL}*(N_{BC}-j)+L_{UR}*(j-1))+(i-1)* \\ *(L_{BL}*(N_{BC}-j)+L_{BR}*(j-1)))/((N_{BR}-1)*(N_{BC}-1))$$

where $L_{UL}=UL(I((i,j)_{SB}))$, $L_{UR}=UR(I((i,j)_{SB}))$, $L_{BL}=BL(I((i,j)_{SB}))$ and $L_{BR}=BR(I((i,j)_{SB}))$.

The equation (2) has general validity, i.e., it can be used for equalizing the levels of intensity of the pixels of second blocks, not only of the first type, but also of the second and third types.

In fact, once again with reference to Figure 20, in the case of the second blocks of the second type 209, 212, 213 and 216, i.e., in the case of second blocks of the second type positioned at the right edge and the left edge of the image to be equalized divided into first blocks, in order to equalize the intensity levels of the corresponding pixels, in the equation (2) we must impose $L_{UL}=L_{UR}$ and $L_{BL}=L_{BR}$, whereas in the case of the second blocks of the third type 210, 211, 214 and 215, i.e., in the case of second blocks of the third type positioned at the top edge and at the bottom edge of the image to be equalized divided into first blocks, in order to equalize the intensity levels of the corresponding pixels, in the equation (2) we must impose $L_{UL}=L_{BL}$ and $L_{UR}=L_{BR}$.

In addition, in the case of the second blocks of the third type 217, 218, 219 and 220, in order to equalize the intensity levels of the corresponding pixels, in the equation (2) we must impose $L=L_{UL}=L_{UR}=L_{BL}=L_{BR}$, where $L$ is the first equalization function corresponding to just the first block on which the second blocks 217, 218, 219 and 220 are superimposed, i.e., respectively, the first block 171, the first block 173, the first block 177, and the first block 179.

On the other hand, on account of the way in which the first equalization functions are computed and on account of the way in which the equations (1) and (2) are structured, in the equalized image the equalized levels of intensity of the pixels are comprised between *0* and *1*.

In order to display the equalized image on a screen configured to display intensity levels comprised between *0* and *255*, the intensity level, comprised between *0* and *1*, of each pixel in the equalized image can be conveniently multiplied by a factor of *255* and then rounded off to the closest integer.

Preferably, the image to be equalized by means of the equalization method 150 is an IR image acquired from a thermocamera.

It should be emphasized how the equalization method 150 so far described and forming the subject of the present invention does not suffer from the problems linked to the CLAHE technique, i.e., the residual block effect and the presence of regular patterns, since the equalization of the intensities of the pixels of a generic block is based both upon the intensities of the pixels in the generic block and upon the intensities of the pixels in the adjacent blocks.

It should likewise be emphasized how the equalization method 150 does not even suffer from the problem of the salt-and-pepper effect linked to the POSHE technique since the equalization of the intensities of the pixels is based upon the computation of histograms limited in amplitude.

In addition, it is once again pointed out that the equalization method 150, during the computation of first equalization functions (block 152), creates histograms that are saturated at a maximum value of amplitude already at the moment of their creation, unlike the CLAHE technique whereby the histograms are first created and subsequently are limited to a maximum value re-allocating the quantities of pixels exceeding the maximum value. Said characteristic of the equalization method 150 enables computation times to be obtained that are much shorter than those of the CLAHE technique, which are very long on account of the construction of many histograms first, and of the limitation with allocation of the excesses subsequently, and which render the CLAHE technique not suited to real-time processing of videos made up of IR images.

In particular, the equalization method 150 can be performed on an IR image in a time of less than *0.04* seconds, the maximum time allowed for real-time processing of IR images belonging to a video flow to obtain a fluent presentation of the video. Consequently, the equalization method 150 finds advantageous application in real-time processing of IR images belonging to a video flow acquired from a thermocamera.

In addition, the equalization method 150, unlike the CLAHE technique, does not execute an interpolation of the intensities of the pixels present in areas of boundary between adjacent blocks, but rather performs an interpolation of the first equalization functions corresponding to adjacent blocks.

Finally, a further advantage of the equalization method 150 derives directly from the equation (2), the mathematical structure of which is particularly suited to a software implementation based upon the use of pre-defined and prestored matrices that contain all the weighting factors of the first equalization functions based upon the complement of the distance. It may be readily understood how said software implementation is particularly fast.

Described hereinafter is an image-processing method that also forms the subject of the present invention and that comprises the equalization method 150.

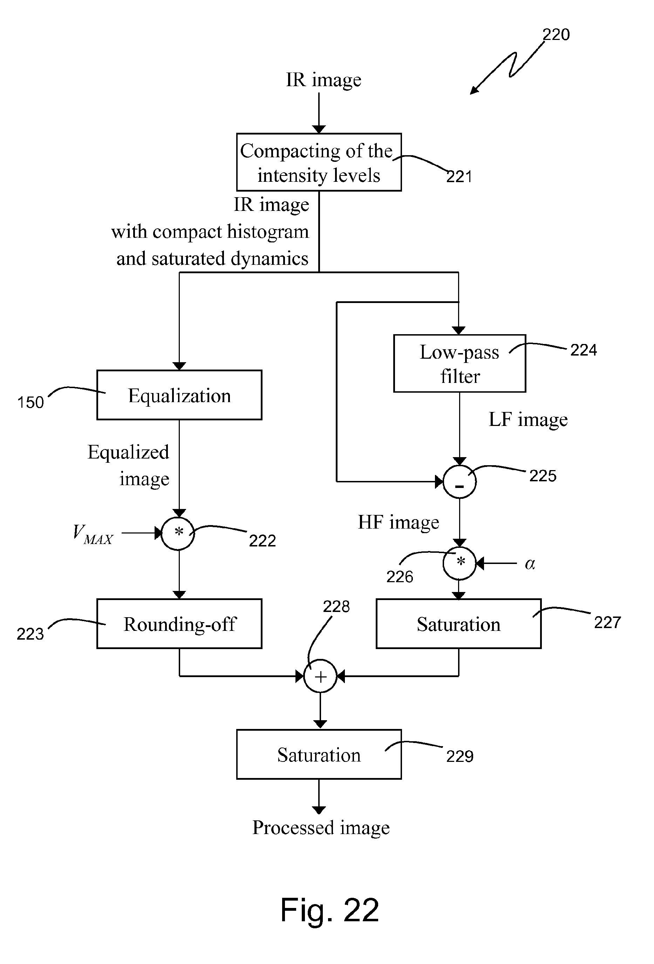

In particular, illustrated in Figure 22 is a flowchart of a method 220 for processing an image according to the present invention.

In detail, the processing method 220 is applied to an IR image acquired from a thermocamera, the IR image being made up of a matrix of pixels having $N_{IC}$ columns and $N_{IR}$ rows, in which each pixel assumes a corresponding intensity level comprised in a given set of intensity levels $[L_0,L_{MAX}]$, which comprises all the intensity levels that can be sensed by the thermocamera that has sensed the IR image and from which said IR image has been acquired.

The intensity level of each pixel in the IR image is encoded with $n$ bits, the number of the intensity levels thus being equal to $2^n$ and $L_{MAX}=2^n-1$. For example, if $n=16$, the number of the intensity levels is equal to $65536$ and $L_{MAX}=65535$.

In other words, in the IR image we have $I(i,j){\in}[L_0,L_{MAX}]$, i.e., I$(i,j){\in}$ $[0,2^n-1]$, where $I(i,j)$ is the intensity level assumed by the pixel in position (i,j) in the IR image, with $1{\leq}i{\leq}N_{IR}$ and $1{\leq}j{\leq}N_{IC}$.

In addition, the processing method 220 comprises, in the first place, a compacting of the intensity levels (block 221).

Said compacting of the intensity levels (block 221) in turn comprises defining a maximum intensity value $V_{MAX}$ at which to saturate the dynamics of the levels of intensity of the pixels in the IR image.

In particular, by implementing the processing method 220 by means of a software program executed by an electronic processor, said maximum intensity value $V_{MAX}$ is conveniently chosen on the basis of the performance of computation of the electronic processor.

In fact, the higher the maximum intensity value $V_{MAX}$, the greater must be the power and the performance of computation of the electronic processor.

In addition, compacting of the intensity levels (block 221) also comprises:

- forming a first vector $A$ containing $2^n$ elements, each configured to store a corresponding bit, initially all the elements storing a zero;
- for each intensity level $L$ comprised in the given set of intensity levels $[L_0,L_{MAX}]$ and assumed by at least one pixel in the IR image, storing a one in the element $A[L]$ of the first vector A thus obtaining that at the end the first vector $A$ stores a one in all the elements corresponding to the intensity levels assumed by at least one pixel in the IR image;
- forming a second vector $B$ containing a cumulative function saturated at the maximum intensity value $V_{MAX}$ of the bits stored in the first vector $A$, said second vector $B$ comprising $2^n$ elements, the generic element $B[k]$ of the second vector $B$, where $k$ is an integer ranging between $0$ and $2^n-1$, being computed as

$$B[k] \;=\; \begin{cases} \displaystyle\sum_{l=0}^{k} A[l] & if \quad B[k] \;<\; V_{MAX} \\[2em] V_{MAX} & if \quad B[k] \;\geq\; V_{MAX} \end{cases}$$

in this way the second vector $B$ storing a law of transformation that, if applied to the IR image acquired from the thermocamera, generates a second IR image having a compact histogram and a dynamics of the intensity levels saturated at the maximum intensity value $V_{MAX}$; and

- forming an IR image with compact histogram and saturated dynamics made up of a matrix of pixels having $N_{IC}$ columns and $N_{IR}$ rows in which the generic pixel in position $(i,j)$, with $1{\leq}i{\leq}N_{IR}$ and $1{\leq}j{\leq}N_{IC}$' assumes a corresponding intensity level $I(i,j)=B[I(i,j)]$, where $I(i,j)$ is the intensity value assumed by the pixel in position $(i,j)$ in the IR image acquired from the thermocamera.

Conveniently, in the case of processing of a video flow made up of a sequence of IR images acquired from a thermocamera, for each IR image $F_T$ belonging to the video flow there can be generated a corresponding IR image with compact histogram and saturated dynamics on the basis of a first vector $A$ and a second vector $B$ generated on the basis of a corresponding IR image $F_{T-1}$ belonging to the video flow, the subscript $T$ indicating the corresponding position of the IR image $F_T$ within the sequence of IR images acquired from the thermocamera, and hence the subscript $T-1$ indicating the corresponding IR image $F_{T-1}$ that in the sequence of IR images precedes the IR image $F_T$. This choice of implementation can be made to increase the processing speed of the processing method 220. In particular, the error that is committed using for the current IR image $F_T$ the second vector $B$ generated on the basis of the preceding IR image $F_{T-1}$ is practically zero, above all considering the variations in thermal terms that can occur in the scenario filmed by the thermocamera in $20$ or $40$ $ms$, i.e., in the time interval that elapses between the film taken by the thermocamera of one IR image and the next one.

In addition, once again as illustrated in Figure 22, the processing method 220 also comprises:

- equalizing (block 150) by means of the equalization method 150 the IR image with compact histogram and saturated dynamics, thus obtaining a corresponding first equalized image in which the intensity level of each pixel is comprised in the set *[0,1]*;
- multiplying (block 222) the intensity level of each pixel in the first equalized image by the maximum intensity value $V_{MAX}$ and rounding off (block 223) the intensity level resulting from said multiplication to the closest integer, thus obtaining a second equalized image in which the intensity level $I^{eq}(i,j)$ of each pixel (i,j), with $1 \le i \le N_{IR}$ and $1 \le j \le N_{IC}$, is comprised in the set *[0,$V_{MAX}$]*;
- filtering with a low-pass filter (block 224) the IR image with compact histogram and saturated dynamics, thus obtaining an LF image that contains only the low spatial frequencies of the IR image with compact histogram and saturated dynamics, the low-pass filter being conveniently obtained by means of a sliding window that is slid over the entire IR image with compact histogram and saturated dynamics and that averages the intensity of the pixels within it;
- subtracting (block 225) the intensity level of each pixel of the LF image from the intensity level of the corresponding pixels in the IR image with compact histogram and saturated dynamics, thus obtaining an HF image that contains only the high spatial frequencies of the IR image with compact histogram and saturated dynamics, i.e., using a mathematical formalism, $I_{HF}(i,j) = I(i,j) - I_{LF}(i,j)$, with $1 \le i \le N_{IR}$ and $1 \le j \le N_{IC}$, where $I_{HF}(i,j)$ is the intensity level of the pixels in position *(i,j)* in the HF image, *I(i,j)*, as already mentioned previously, is the intensity level of the pixel in position *(i,j)* in the image with compact histogram and saturated dynamics, and $I_{LF}(i,j)$ is the intensity level of the pixel in position *(i,j)* in the LF image;
- amplifying (block 226) the intensity levels in the HF image, multiplying the intensity level of each pixel in the HF image by an amplification factor $\alpha$, thus obtaining an image HF$_{ampl}$, i.e., using a mathematical formalism,

$$I_{HF}^{ampl}(i,j) = \alpha * I_{HF}(i,j) \text{ , where } I_{HF}^{ampl}(i,j) \text{ is the intensity level of the pixel in position } (i,j) \text{ in the image}$$

  HF$_{ampl}$;
- saturating (block 227) to the maximum intensity value $V_{MAX}$ all the intensity levels in the image HF$_{ampl}$ that are higher than said maximum intensity value $V_{MAX}$, i.e., using a mathematical formalism, for each pixel in position *(i,*

  *j)*, with $1 \le i \le N_{IR}$ and $1 \le j \le N_{IC}$, in the image HF$_{ampl}$ whereby $I_{HF}^{ampl}(i,j) \ge V_{MAX}$ it is imposed

  $$I_{HF}^{ampl}(i,j) = V_{MAX} \text{ ;}$$

- adding (block 228) the intensity level of each pixel of the image HF$_{ampl}$ to the intensity level of the corresponding pixels in the second equalized image, thus obtaining a processed image, i.e., using a mathematical formalism,

  $$I^{el}(i,j) = I^{eq}(i,j) + I_{HF}^{ampl}(i,j) \text{ , where } I^{el}(i,j) \text{ is the intensity level of the pixel in position } (i,j) \text{ in the proc-}$$

  essed image; and
- saturating (block 229) to the maximum intensity value $V_{MAX}$ all the intensity levels in the processed image that are higher than said maximum intensity value $V_{MAX}$, i.e., using a mathematical formalism, for each pixel in position *(i, j)*, with $1 \le i \le N_{IR}$ and $1 \le j \le N_{IC}$, in the processed image whereby $I^{el}(i,j) \ge V_{MAX}$ it is imposed $I^{el}(i,j) = V_{MAX}$.

  In addition, in order to display the image processed by means of the processing method 220 on a screen configured to displa intensity levels ranging between *0* and *255,* the intensity level, comprised between *0* and $V_{MAX}$, of each pixel in the processed image can be conveniently divided by $V_{MAX}$ and then multiplied by a factor of *255*.

  The processing method 220 according to the present invention achieves a higher definition of the local contours thanks to the simultaneous use of the equalization method 150 and of an amplification of the high spatial frequencies, which is obtained by means of the blocks 224, 225 and 226.

  In addition, the characteristic of the processing method 220 of adding (block 228) the second equalized image to the image HF$_{ampl}$ enables use of amplification and averaging factors that are very low, thus rendering the processing method 220 immune from the problem of the halo effect.

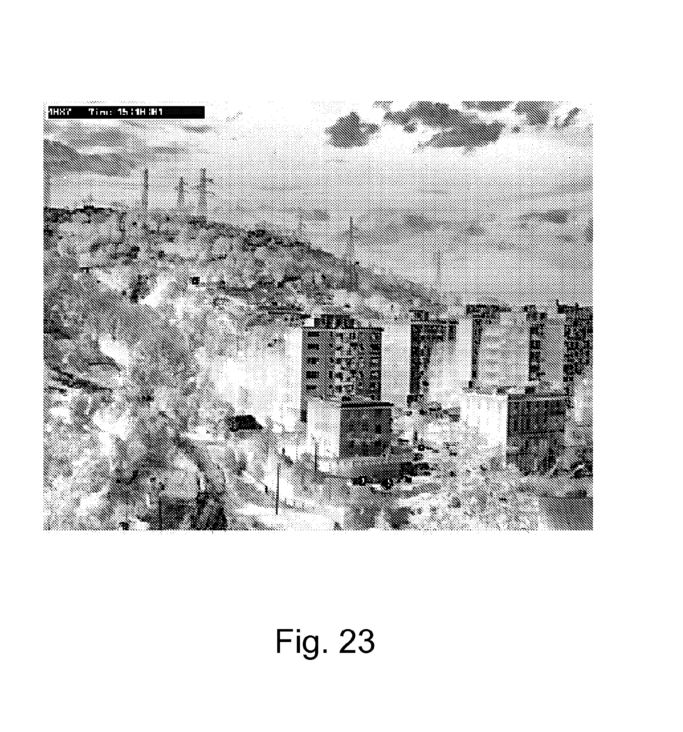

  Illustrated in Figure 23 is the IR image of the example processed by means of the processing method 220.

  From a comparison of the images illustrated in Figures 4, 6, 10, 12 and 14 with the image illustrated in Figure 23 it is immediately evident how the IR image of the example processed by means of the processing method 220 forming the subject of the present invention proves more attractive, realistic, and enriched with all those details useful for IR-image-based applications as compared to the images processed using the known techniques.

  From the foregoing description the advantages of the present invention are immediately understandable.

  In particular, it should be emphasized once again that the image-processing method according to the present invention eliminates the problems linked to known processing techniques, namely,

- the block effect;
- the presence of regular patterns;
- the salt-and-pepper effect; and
- the halo effect.

In addition, another advantage of the present invention derives from the fact that it involves contained computation times that enable exploitation thereof in real-time processing of video flows made up of IR images.

Finally, it is clear that various modifications may be made to the present invention, all of which fall within the sphere of protection of the present invention as defined in the annexed claims.

**Claims**

1. An equalization method for equalizing an image made up of pixels, each pixel having a respective intensity level, said equalization method comprising:

   • dividing the image into first regions;
   • grouping in such a way as to form groups of first regions, each group of first regions comprising a respective plurality of adjacent first regions;
   • computing for each group of first regions a corresponding histogram of the levels of intensity of the pixels in said first regions comprised in said group;
   • computing for each group of first regions a corresponding cumulative function of the corresponding histogram;
   • associating to each first region the cumulative function(s) computed for the group(s) comprising said first region;
   • computing for each first region a corresponding first equalization function on the basis of the cumulative function(s) associated to said first region;
   • dividing said image into second regions in such a way that each second region comprises corresponding areas of different corresponding adjacent first regions; and
   • equalizing in each second region the intensity level of the corresponding pixels on the basis of the first equalization functions computed for the corresponding first regions.

2. The equalization method according to Claim 1, wherein the intensity level of each pixel is comprised in a given first set of intensity levels, and wherein for each group of first regions the corresponding histogram comprises for each intensity level in the given first set of intensity levels a corresponding number of pixels; computing for each group of first regions a corresponding histogram comprising:

   • computing an allowed maximum number of pixels on the basis of a total number of the pixels in said first regions comprised in the group; and
   • computing said histogram by counting each pixel in said first regions comprised in the group in the number of pixels corresponding to the intensity level of said pixel if said number of pixels corresponding to the intensity level of said pixel is lower than said allowed maximum number of pixels, otherwise counting said pixel in the number of pixels corresponding to an intensity level different from the intensity level of said pixel, said number of pixels corresponding to an intensity level different from the intensity level of said pixels being lower than said allowed maximum number of pixels.

3. The equalization method according to Claim 2, wherein computing for each group of first regions a corresponding cumulative function of the corresponding histogram comprises:

   • computing an integral normalized to one of said histograms, said integral being said cumulative function.

4. The equalization method according to Claim 3, wherein computing an integral normalized to one of said histograms comprises:

   • computing for each intensity level in the given first set of intensity levels a corresponding sum of the numbers of pixels corresponding in said histogram to the intensity levels lower than said intensity level and of the number of pixels corresponding in said histogram to said intensity level; and
   • computing for each intensity level in the given first set of intensity levels a corresponding cumulative value equal to the corresponding computed sum divided by the total number of the pixels in said first regions comprised in the group, said integral assuming at each intensity level in the given first set of intensity levels the corresponding computed cumulative value.

5. The equalization method according to Claim 4, wherein computing for each first region a corresponding first equalization function comprises:

• computing for each intensity level in the given first set of intensity levels a corresponding mean value of the respective cumulative values assumed by the cumulative functions associated to said first region at said intensity level, said first equalization function assuming at each intensity level in the given first set of intensity levels the corresponding computed mean value.

6. The equalization method according to any one of the preceding claims, wherein equalizing in each second region the intensity level of the corresponding pixels comprises:

• assigning an equalized intensity level to said pixels on the basis of a bilinear interpolation of the first equalization functions computed for the corresponding first regions.

7. The equalization method according to Claim 6, wherein assigning an equalized intensity level to said pixels on the basis of a bilinear interpolation of the first equalization functions computed for the corresponding first regions comprises:

• assigning to each pixel a respective equalized intensity level computed on the basis of a bilinear interpolation of values assumed by said first equalization functions at the intensity level of said pixel.

8. The equalization method according to any one of the preceding claims, further comprising:

• dividing said image into third regions in such a way that each third region comprises a corresponding area of a corresponding first corner region of said image; and
• equalizing the intensity level of the pixels in each third region on the basis of the first equalization function computed for the corresponding first region.

9. The equalization method according to any one of the preceding claims, wherein said image is an image sensed by a thermocamera, and wherein the first regions are all the same as one another and do not overlap one another, the second regions being all the same as one another and not overlapping one another, for each second region the corresponding areas of the different corresponding first regions being all the same as one another.

10. An image-processing method, comprising:

• acquiring an image, said acquired image being made up of pixels, each pixel having a corresponding intensity level comprised in a given second set of intensity levels that comprises a first total number of intensity levels;
• compacting and saturating at a maximum intensity value the levels of intensity of the pixels in said acquired image in such a way as to obtain an image with compact histogram and saturated dynamics, said image with compact histogram and saturated dynamics being made up of pixels, each pixel in said image with compact histogram and saturated dynamics having a corresponding intensity level comprised in a given third set of intensity levels that comprises a second total number of intensity levels, said second total number of intensity levels being smaller than said first total number of intensity levels, each pixel in said image with compact histogram and saturated dynamics having the corresponding intensity level lower than or equal to said maximum intensity value, each pixel in said image with compact histogram and saturated dynamics corresponding in a biunique way to a corresponding pixel in said acquired image;
• equalizing said image with compact histogram and saturated dynamics by means of the equalization method according to any one of the preceding claims in such a way as to obtain an equalized image;
• processing said image with compact histogram and saturated dynamics in such a way as to obtain a high-frequency image, said high-frequency image being made up of pixels, each pixel in said high-frequency image having a corresponding intensity level and corresponding in a biunique way to a corresponding pixel in said image with compact histogram and saturated dynamics, the levels of intensity of the pixels in said high-frequency image indicating only high spatial frequencies of the levels of intensity of the pixels in the image with compact histogram and saturated dynamics;
• amplifying the levels of intensity of the pixels in said high-frequency image; and

• obtaining a final image on the basis of the equalized image and of the high-frequency image.

11. The image-processing method according to Claim 10, wherein compacting and saturating at a maximum intensity value the levels of intensity of the pixels in said acquired image comprises:

• forming a first vector that stores for each intensity level comprised in said second set of intensity levels a corresponding first value, for each intensity level the corresponding first value being equal to one if said acquired image comprises at least one pixel having said intensity level, otherwise said corresponding first value being equal to zero;
• forming a second vector that stores for each intensity level comprised in said second set of intensity levels a corresponding second value equal to a sum of the first values corresponding to the intensity levels lower than or equal to said intensity level if said sum is smaller than said maximum intensity value, otherwise said corresponding second value being equal to said maximum intensity value, each pixel in the image with compact histogram and saturated dynamics having the corresponding intensity level equal to the second value stored in the second vector for the intensity level of the corresponding pixel in said acquired image.

12. The image-processing method according to Claim 10 or Claim 11, wherein processing said image with compact histogram and saturated dynamics in such a way as to obtain a high-frequency image comprises:

• filtering with a low-pass filter said image with compact histogram and saturated dynamics in such a way as to obtain a low-frequency image, said low-frequency image being made up of pixels, each pixel in said low-frequency image having a corresponding intensity level and corresponding in a biunique way to a corresponding pixel in said image with compact histogram and saturated dynamics, the levels of intensity of the pixels in said low-frequency image indicating only low spatial frequencies of the levels of intensity of the pixels in the image with compact histogram and saturated dynamics; and
• subtracting the intensity level of each pixel in the low-frequency image from the intensity level of the corresponding pixel in the image with compact histogram and saturated dynamics in such a way as to obtain said high-frequency image.

13. A computer program loadable into an electronic processor and configured to implement, when run on said electronic processor, the equalization method according to any one of Claims 1-9.

14. A computer program loadable into an electronic processor and configured to implement, when run on said electronic processor, the image-processing method according to any one of Claims 10-12.

Fig. 1

Fig. 2

Fig. 3

Fig. 4

Fig. 5

Fig. 6

Fig. 7

Fig. 8

Fig. 9

Fig. 10

Fig. 11

Fig. 12

130

Image to be processed

Low-pass
filter ———— 131

Image LF

— ———— 132

Image HF

$\alpha$ ——→ * ———— 133

+ ←—— 134

Processed image

# Fig. 13

Fig. 14

150

Image to be equalized

Division into first
blocks — 151

Image to be equalized
divided into first blocks

153 Division into second
blocks

Computation of first
equalization functions — 152

Image to be equalized
divided into first
and second blocks

First equalization
functions

Equalization

154

Equalized image

Fig. 15

$N_{IC}=6$

| | | | | | |
|---|---|---|---|---|---|
| 49935 | 49928 | 49928 | 49921 | 49940 | 49934 |
| 49935 | 49927 | 49927 | 49923 | 49939 | 49933 |
| 49940 | 49934 | 49934 | 49927 | 49944 | 49944 |
| 49939 | 49933 | 49933 | 49925 | 49943 | 49943 |
| 49944 | 49944 | 49944 | 49936 | 49946 | 49945 |
| 49943 | 49943 | 49943 | 49936 | 49946 | 49945 |

$N_{IR}=6$

160

Fig. 16

$N_{BC}=2$

160

171    172  175    173

| | | | | | |
|---|---|---|---|---|---|
| 49935 | 49928 | 49928 | 49921 | 49940 | 49934 |
| 49935 | 49927 | 49927 | 49923 | 49939 | 49933 |
| 49940 | 49934 | 49934 | 49927 | 49944 | 49944 |
| 49939 | 49933 | 49933 | 49925 | 49943 | 49943 |
| 49944 | 49944 | 49944 | 49936 | 49946 | 49945 |
| 49943 | 49943 | 49943 | 49936 | 49946 | 49945 |

$N_{BR}=2$

174

176

177    178    179

Fig. 17

152

Image to be equalized divided into first blocks

Initial step — 181

Recursive step — 182

184

188

186

Step of creation of a new subblock

— 183

Decision step

187

Final step — 185

First equalization functions

# Fig. 18

Fig. 19

Fig. 20

Fig. 21

Fig. 22

Fig. 23

Europäisches
Patentamt

European
Patent Office

Office européen
des brevets

**EUROPEAN SEARCH REPORT**

**Application Number**

EP 10 15 5258

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | JOUNG-YOUN KIM ET AL: "An Advanced Contrast Enhancement Using Partially Overlapped Sub-Block Histogram Equalization" IEEE TRANSACTIONS ON CIRCUITS AND SYSTEMS FOR VIDEO TECHNOLOGY, IEEE SERVICE CENTER, PISCATAWAY, NJ, US, vol. 11, no. 4, 1 April 2001 (2001-04-01), XP011014185 ISSN: 1051-8215 * abstract * * Section III. * * figure 3 * | 1-14 | INV. G06T5/40 |
| Y | BRANCHITTA F. ET AL.: "Dynamic-range compression and contrast enhancement in infrared imaging systems" OPTICAL ENGINEERING, vol. 47, no. 7, July 2008 (2008-07), pages 076401-1-076401-14, XP002555977 ISSN: 0091-3286 * the whole document * | 1-14 | |
| Y | EP 1 093 295 A (RISO KAGAKU CORP [JP]) 18 April 2001 (2001-04-18) * abstract * * paragraph [0009] * * paragraph [0045] * * paragraph [0050] - paragraph [0051] * * figures 7,9 * | 1-8,13 | TECHNICAL FIELDS SEARCHED (IPC) G06T H04N |
| Y | WO 01/26054 A (MICROSOFT CORP [US]) 12 April 2001 (2001-04-12) * abstract * * page 2, line 25 - page 3, line 33 * * page 8, line 6 - page 10, line 33 * | 1,6-8,13 | |

-/--

The present search report has been drawn up for all claims

| Place of search | Date of completion of the search | Examiner |
|---|---|---|
| Munich | 26 May 2010 | Salvador, Elena |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches Patentamt
European Patent Office
Office européen des brevets

# EUROPEAN SEARCH REPORT

**Application Number**

EP 10 15 5258

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JIE ZHAO ET AL: "Automatic Digital Image Enhancement for Dark Pictures" ACOUSTICS, SPEECH AND SIGNAL PROCESSING, 2006. ICASSP 2006 PROCEEDINGS . 2006 IEEE INTERNATIONAL CONFERENCE ON TOULOUSE, FRANCE 14-19 MAY 2006, PISCATAWAY, NJ, USA,IEEE, PISCATAWAY, NJ, USA, 1 January 2006 (2006-01-01), pages II-II, XP031100762 ISBN: 978-1-4244-0469-8 * abstract * * Section 2.3 * * figure 1 * ----- | 1,6-8,13 | |
| Y | EP 1 667 064 A (MATSUSHITA ELECTRIC IND CO LTD [JP] PANASONIC CORP [JP]) 7 June 2006 (2006-06-07) * abstract * * paragraph [0001] - paragraph [0007] * * paragraph [0070] - paragraph [0108] * * paragraph [0216] - paragraph [0234] * * paragraph [0280] - paragraph [0282] * * figures 1,2,9 * ----- | 1,6-8,13 | TECHNICAL FIELDS SEARCHED (IPC) |
| A | PIZER S M ET AL: "ADAPTIVE HISTOGRAM EQUALIZATION AND ITS VARIATIONS" COMPUTER VISION GRAPHICS AND IMAGE PROCESSING, ACADEMIC PRESS, DULUTH, MA, US, vol. 39, no. 3, 1 September 1987 (1987-09-01), pages 355-368, XP001002914 * the whole document * ----- -/-- | 1-14 | |

The present search report has been drawn up for all claims

| Place of search | Date of completion of the search | Examiner |
|---|---|---|
| Munich | 26 May 2010 | Salvador, Elena |

EPO FORM 1503 03.82 (P04C01)

Europäisches
Patentamt

European
Patent Office

Office européen
des brevets

**EUROPEAN SEARCH REPORT**

Application Number

EP 10 15 5258

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | PELI E. ET AL.: "Image enhancement for the visually impaired" OPTICAL ENGINEERING, vol. 23, no. 1, January 1984 (1984-01), - February 1984 (1984-02) pages 47-51, XP009125999 * Section 3 * * figure 3 * ----- | 1-14 | |

TECHNICAL FIELDS
SEARCHED        (IPC)

The present search report has been drawn up for all claims

| Place of search | Date of completion of the search | Examiner |
|---|---|---|
| Munich | 26 May 2010 | Salvador, Elena |

EPO FORM 1503 03.82 (P04C01)

## ANNEX TO THE EUROPEAN SEARCH REPORT
## ON EUROPEAN PATENT APPLICATION NO.

EP 10 15 5258

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2010

| Patent document cited in search report | | Publication date | Patent family member(s) | | Publication date |
|---|---|---|---|---|---|
| EP 1093295 | A | 18-04-2001 | JP | 3902894 B2 | 11-04-2007 |
| | | | JP | 2001113754 A | 24-04-2001 |
| | | | US | 6771814 B1 | 03-08-2004 |
| WO 0126054 | A | 12-04-2001 | AU | 7848800 A | 10-05-2001 |
| | | | US | 6650774 B1 | 18-11-2003 |
| EP 1667064 | A | 07-06-2006 | WO | 2005027041 A1 | 24-03-2005 |
| | | | JP | 2009211708 A | 17-09-2009 |
| | | | KR | 20060121876 A | 29-11-2006 |
| | | | US | 2007071318 A1 | 29-03-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5249241 A

**Non-patent literature cited in the description**

- **Anil K. Jain.** Fundamentals of Digital Image Processing. Prentice Hall, 1989, 241-242
- **J. Zimmerman.** An evaluation of the effectiveness of adaptive histogram equalization for contrast enhancement. *IEEE Trans. On Medical Imaging,* December 1988, vol. 7 (4), 304-312
- **S. Pizer.** CLAHE: Speed and Effectiveness. *IEEE, TH0311,* 1990, vol. 1 (90), 337-345
- **Joung Youn Kim.** An advanced contrast enhancement using partially overlapped subblock histogram equalization. *IEEE Trans. On circuits and systems for Video technology,* April 2001, 475-483
- **Eli Peli.** *Image Enhancement for the visually Impaired Optical Engineering,* 1984, vol. 23 (1), 47-51